# EUROPEAN PATENT SPECIFICATION

(11) **EP 2 848 115 B1**
(45) Date of publication and mention of the grant of the patent: **25.05.2016**
(21) Application number: 14002407.6
(22) Date of filing: 12.07.2014
(51) Int. Cl.: A01J 25/00

(54) **A machine for moulding pasta filata**
Maschine zum Formen von Pasta-Filata
Machine de moulage de pâte filée

(30) Priority: 09.09.2013 IT TO20130727
(43) Date of publication of application: 18.03.2015
(73) Proprietor: CMT Costruzioni Meccaniche e Tecnologia S.p.A., 12016 Peveragno CN (IT)
(72) Inventor: Tomatis, Stefano, I-12016 Peveragno (CN) (IT)
(74) Representative: Modiano, Micaela Nadia

(56) References cited:
- EP-A1- 0 625 304
- US-A- 5 881 639
- US-A1- 2007 012 197

## Description

The present invention relates to a machine for moulding pasta filata, see e.g. US-A-2007/0012197.

In the industrial production of cheese it is known to mould the pasta filata into bars by extrusion.

With another conventional extruder, the pasta filata is pushed by two counter-rotating augers towards a perforated extrusion wall, from which it comes out in the shape of bars, the diameter of which substantially corresponds to the diameter of the holes in the extrusion wall. The so-obtained bars of pasta filata are then cooled in a consolidation basin filled with cold water.

The above conventional extrusion system has the drawback that the bars produced may have uneven profiles and diameters, specially in the case of bars which are relatively small in diameter, e.g., in the range 10 to 15 mm. This drawback is due to the fact that the pasta filata is an elastic material which is compressed during the extrusion and, when it comes out from the perforated wall in the shape of bars, it is still subject to internal stresses causing it to expand radially in an uncontrolled manner.

This drawback leads to further negative consequences when the bars are segmented into equal-in-lenght sticks, e.g., by shearing them at equal intervals while they are coming out from the extruder. In fact, in this case, the above-mentioned unevenness in the profile and in the diameter results in considerable differences in weight between the sticks.

Therefore, it is a main object of the present invention to provide a pasta filata-moulding machine which is capable of producing bars having uniform diameters and regular profiles, with considerably improved performances with respect to the conventional extruders.

The above object and other advantages, which will become apparent from the following description, are achieved by the pasta filata-moulding machine having the features recited in claim 1, while the dependent claims state other advantageous, though secondary, features of the invention.

The invention will be now described in more detail, with reference to a preferred, non-exclusive embodiment shown by way of non-limiting example in the attached drawings, wherein:
Fig. 1 is a front view of a pasta filata-moulding machine according to the invention;
Fig. 2 is a view in cross-section of the machine of Fig. 1 made along line II-II;
Fig. 3 is an exploded, perspective view, which isolately shows a moulding head incorporated in the machine of Fig. 1;
Fig. 4 shows the moulding head of Fig. 3 to an enlarged scale and in cross-section as illustrated in Fig. 1;
Fig. 5 is a view in cross-section of Fig. 4 made along line V-V.

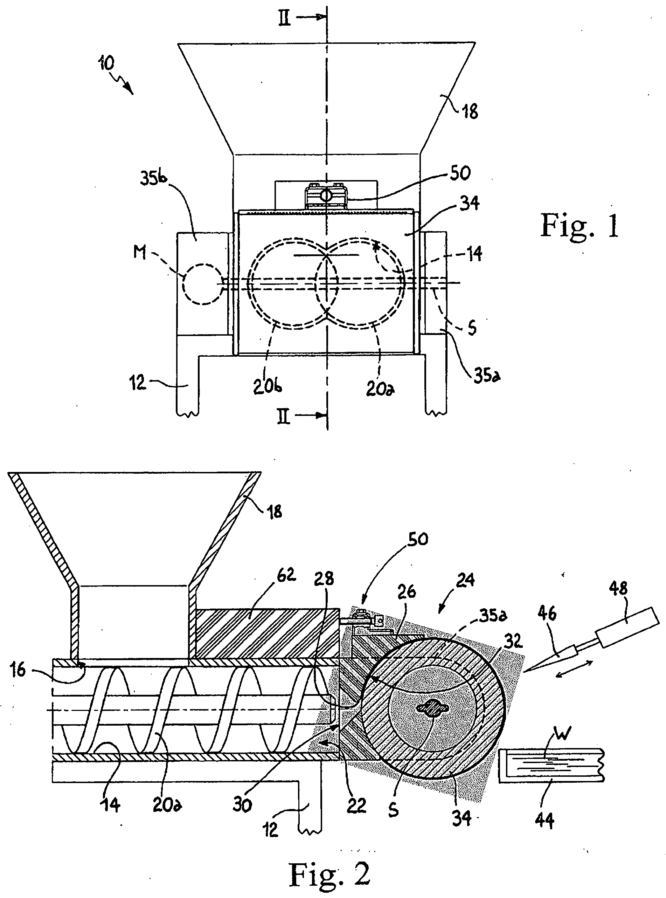

With initial reference to Figs. 1 and 2, a pasta filata-moulding machine 10 comprises a frame 12 supporting a horizontal duct 14 which is provided with an upper loading opening 16 for receiving a mass of pasta filata (not shown) from a hopper 18.

Duct 14 houses a pair of counter-rotating, motorized augers 20a, 20b which are rotatably supported side-by-side. Augers 20a, 20b are operatable to push the pasta filata loaded via hopper 18 towards an outlet 22 of duct 14 which has a moulding head applied thereto, referred to as 24 in its entirety.

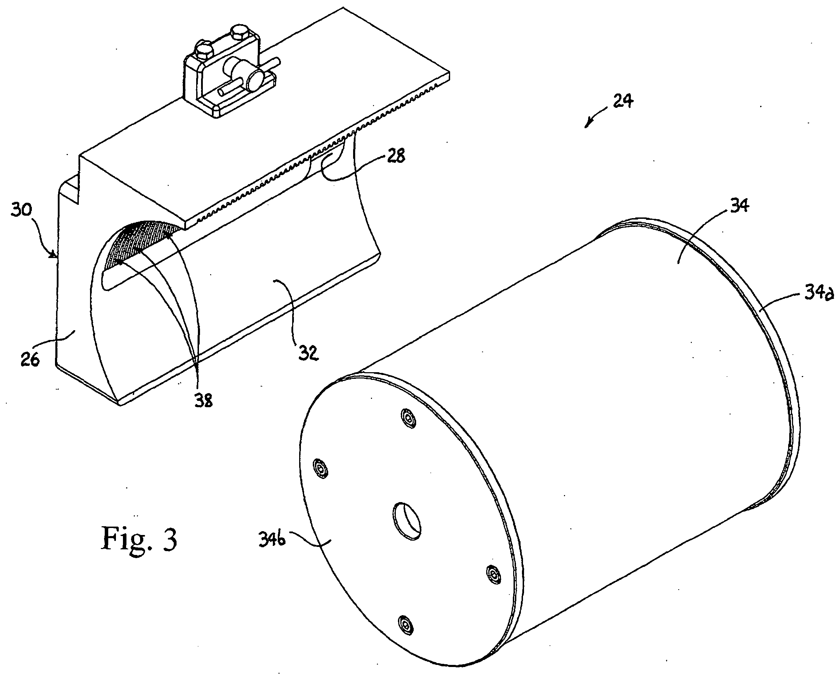

Having now reference to Figs. 3-5, moulding head 24 according to the invention comprises a cylindrical drum 34 with a smooth surface, which is horizontally supported in front of outlet 22 and is driven to rotate axially by motor means M. A body 26 is arranged between outlet 22 and drum 34, which has a horizontal slot 28 extending from a first surface 30 of the body which is arranged to obstruct outlet 22, and a second surface 32 which has a concave profile in the shape of a sector of cylinder equal in diameter to drum 34, is arranged adjacent to drum 34, and has a series of circumferential grooves 38 arranged side-by-side.

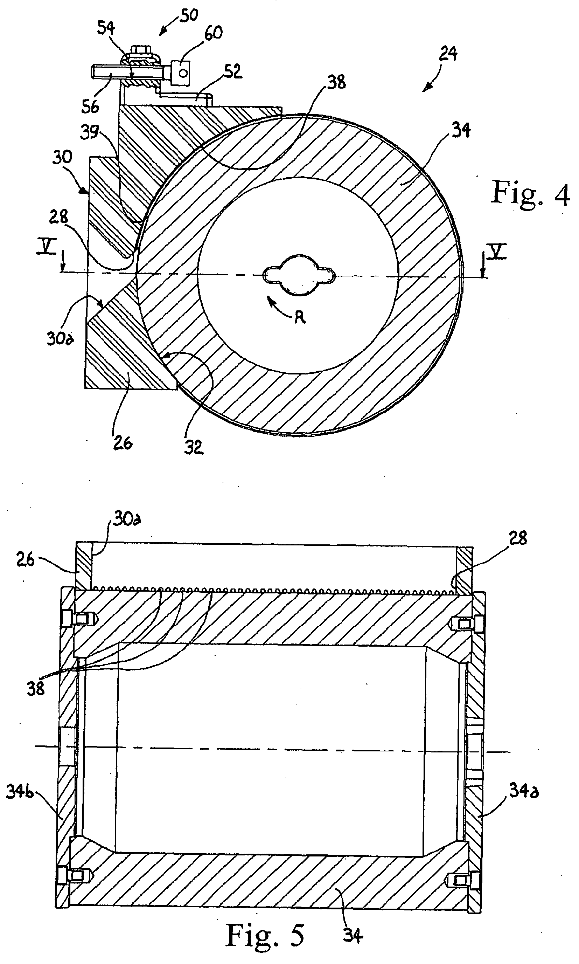

As shown in detail in Figs. 4 and 5, horizontal groove 28 preferably extends obliquely from first surface 30 to second surface 32 in a direction concordant with the direction of rotation of drum 34, i.e., upwards in Fig. 4, wherein drum 34 is assumed to rotate clockwise, in order to guide the pasta filata in the right direction.

Moreover, horizontal slot 28 preferably extends from the bottom of a horizontal V-shaped channel 30a formed on first surface 30 of body 26.

As shown in Figs. 1 and 2, drum 34 is keyed to a shaft S which is rotatably supported between two arms 35a, 35b integral with frame 12. Shaft S is driven to rotate by motor means M (only diagrammatically shown in Fig. 1) incorporated in one of the arms, 35b.

In the example described herein, drum 34 is hollow and is closed at its opposite ends by two disc-shaped plates 34a, 34b which are centrally bored for the insertion of shaft S.

Circumferential grooves 38 are shaped in such a way as to define, when coupled with the outer surface of the drum, channels 39 (Fig. 4) having a closed profile complementary with the profile desired for the bars of pasta filata. For instance, with the embodiment described herein, grooves 38 on body 26 have a semi-circular profile, whereby the resulting bars of pasta filata will have a semi-cylindrical profile with a flat side at the area of contact with the drum. Of course, other rounded or polygonal profiles may be provided.

With particular reference to Figs. 2 and 4, body 26 is biased by a locking mechanism 50 to abut against drum 34, which therefore slidably rotates against body 26. Locking mechanism 50 comprises a support 52 mounted on body 26 and having a threaded hole 54 which is engaged by a screw 56. Screw 56 is provided with a grip 60 at one end, and frontally abuts, with its opposite end, against an abutment 62 integral with duct 14 (Fig. 2).

With particular reference to Fig. 2, a consolidation basin 44 filled with cold water W is conventionally supported downstream of drum 34 to receive -submerged- the bars of pasta filata coming from drum 34.

Machine 10 is also provided with shearing means (only diagrammatically shown in Fig. 2) comprising a blade 46 operated intermittently by an actuator 48 for segmenting the bars into sticks having a predetermined lenght directly on the drum, which acts as an abutment for the blade. Preferably, actuator 48 is controlled in such a way as to perform a cut every *n* degrees of rotation of the drum (which, e.g., may be provided with an encoder, not shown, to this purpose), wherein *n* is chosen based on the desired lenght for the sticks, in such a way as to always obtain sticks having a desired lenght regardless of the speed of rotation of the drum.

Drum 34 is preferably made of aluminum for food, while body 26 is made of a synthetic material. Preferably, the cylindrical surface of drum 34 is processed by sandblasting to improve the adhesion of the pasta filata.

In operation, the pasta filata is loaded into duct 14 via hopper 18. By operating augers 20a, 2b, the pasta filata is pushed against first surface 30 of body 26 with consequent extrusion through horizontal slot 28. Simultaneously, drum 34 is rotated in the direction indicated by arrow R in Fig. 4, so that the extruded bars of pasta filata enter circumferential grooves 38 and are carried by drum 34 for a portion of its rotation.

At this stage the pasta filata, which is sandwiched between body 26 and drum 34, undergoes a moulding action determined by the profile of the grooves on body 26 and by the outer surface of drum 34, and is free to expand only in the longitudinal direction. To this purpose, concave surface 32 of body 26 advantageously has an angular extent sufficient to contain the pasta filata until it has substantially stopped growing and, therefore, the profile of the bars has consolidated. In this regard, the size of body 26 may be experimentally chosen depending on the phisical properties of the specific pasta filata under processing.

A preferred embodiment of the invention has been described herein, but of course many changes may be made by a person skilled in the art within the scope of the claims. For instance, with the embodiment described herein circumferential grooves 38 are in fluid communication with first surface 30 via a single horizontal slot 28; however, rather then a single channel leading to all the grooves, a row of independent channeld may be provided which obliquely extend from first surface 30 of body 26 and the grooves. In addition, some components of the machine are to be understood as optional. For instance, for the production of continuous bars of pasta filata to put on the market as clews, the shearing step can be carried out manually. Moreover, any other conventional extrusion system may be used upstream of moulding unit 24.

## Claims

1. A pasta filata-moulding machine, comprising a duct (14) provided with an outlet (22) having a moulding head (24) applied thereto, and pushing means (20a, 20b) operable to push a mass of pasta filata loaded in the duct (14) towards said outlet (22),
said moulding head (24) comprising
- a cylindrical drum (34) which is horizontally supported in front of said outlet (22) and is driven to rotate axially by driving means (M), and
- a body (26) interposed between said outlet (22) and said drum (34) and provided with a first surface (30) which is arranged to close said outlet (22), and with a second surface (32) which has a concave profile in the shape of a sector of cylinder equal in diameter to said drum (34), is arranged adjacent to the drum (34), **characterized in that** said second surface (32) has a series of circumferential grooves (38) communicating with said first surface (30) via at least one channel (28),
whereby the pasta filata extruded through said at least one channel (28) is fed into said circumferential grooves (38) and is carried by the drum (34) for a portion of its rotation, thereby receiving a moulding action determined by the opposite profiles of the body (26) and the drum (34).

2. The machine of claim 1, **characterized in that** said at least one channel extends obliquely from said first surface (30) to said second surface (32) in a direction concordant with the direction of rotation of the drum (34).

3. The machine of claim 1 or 2, **characterized in that** said at least one channel consists of a horizontal slot (28) extending between said first surface (30) and said second surface (32).

4. The machine of claim 3, **characterized in that** said horizontal slot (28) extends from the bottom of a horizontal channel having a V-shaped cross section (30a), which is formed on the first surface (30) of the body (26).

5. The machine of any of claims 1 to 4, **characterized in that** said body (26) is biased to abut against the drum (34), which rotates in sliding relation with respect to the body, by a locking mechanism (50).

6. The machine of claim 5, **characterized in that** said locking mechanism (50) comprises a support (52) fixed to the body (26) and having a threaded hole (54) which is engaged by a screw (56) abutting frontally against an abutment (62) integral with said duct (14).

7. The machine of any of claims 1 to 6, **characterized in that** said second surface (32) of the body (26) has an angular extent which is sufficient to contain the pasta filata extruded through said extrusion holes (28) until the the pasta filata has substantially stopped growing.

8. The machine of any of claims 1 to 7, **characterized in that** said circumferential grooves (38) on the body (26) have a semi-circular profile.

9. The machine of any of claims 1 to 8, **characterized in that** it comprises slicing means (46, 48) adapted to slice the pasta filata delivered by the drum (34) into sticks having a predetermined lenght.

10. The machine of claim 9, **characterized in that** said slicing means comprise a blade (46) which is intermittently driven by an actuator (48) controlled to perform a cut every *n* degrees of rotation of the drum (34), where *n* is chosen based on the desired lenght for the sticks.

## Patentansprüche

1. Eine Maschine zum Formen von Pasta-Filata, die einen Kanal (14) umfasst, der mit einem Auslass (22) versehen ist, an dem ein Gießkopf (24) angebracht ist, und Schubmittel (20a, 20b), die betätigt werden können, um eine Masse von Pasta-Filata, die in den Kanal (14) geladen wurde, zu dem Auslass (22) hin zu schieben,
wobei der Gießkopf (24) Folgendes umfasst:
- eine zylindrische Trommel (34), die horizontal vor dem Auslass (22) gelagert ist und von Antriebsmitteln (M) angetrieben wird, um sich axial zu drehen, und
- einen Körper (26), angeordnet zwischen dem Auslass (22) und der Trommel (34) und versehen mit einer ersten Oberfläche (30), die angeordnet ist, um den Auslass (22) zu schließen, und mit einer zweiten Oberfläche (32), die ein konkaves Profil in Form eines Zylindersektors hat, dessen Durchmesser gleich demjenigen der Trommel (34) ist, die angrenzend an die Trommel (34) angeordnet ist, **dadurch gekennzeichnet, dass** die zweite Oberfläche (32) eine Reihe von Umfangsnuten (38) hat, die über mindestens einen Kanal (28) mit der ersten Oberfläche (30) in Austausch stehen,
wodurch die Pasta-Filata, die durch den mindestens einen Kanal (28) extrudiert wird, den Umfangsnuten (38) zugeführt und von der Trommel (34) über einen Teil ihrer Rotation mitgeführt wird, wodurch sie einer Formwirkung ausgesetzt wird, die durch die gegenüberliegenden Profile des Körpers (26) und der Trommel (34) bestimmt wird.

2. Die Maschine gemäß Anspruch 1, **dadurch gekennzeichnet, dass** der mindestens eine Kanal sich schräg von der ersten Oberfläche (30) zu der zweiten Oberfläche (32) in eine Richtung erstreckt, die mit der Rotationsrichtung der Trommel (34) übereinstimmt.

3. Die Maschine gemäß Anspruch 1 oder 2, **dadurch gekennzeichnet, dass** der mindestens eine Kanal aus einem horizontalen Schlitz (28) besteht, der sich zwischen der ersten Oberfläche (30) und der zweiten Oberfläche (32) erstreckt.

4. Die Maschine gemäß Anspruch 3, **dadurch gekennzeichnet, dass** der horizontale Schlitz (28) sich vom Boden eines horizontalen Kanals erstreckt, der einen V-förmigen Querschnitt (30a) hat, der auf der ersten Oberfläche (30) des Körpers (26) geformt ist.

5. Die Maschine gemäß einem beliebigen der Ansprüche 1 bis 4, **dadurch gekennzeichnet, dass** der Körper (26) durch einen Verriegelungsmechanismus (50) vorgespannt ist, um an die Trommel (34) anzustoßen, die sich in gleitender Beziehung im Verhältnis zum Körper dreht.

6. Die Maschine gemäß Anspruch 5, **dadurch gekennzeichnet, dass** der Verriegelungsmechanismus (50) eine Stütze (52) umfasst, die am Körper (26) befestigt ist und eine Gewindebohrung (54) hat, in die eine Schraube (56) eingreift, welche frontal an ein Widerlager (62) anstößt, das integral mit dem Kanal (14) ist.

7. Die Maschine gemäß einem beliebigen der Ansprüche 1 bis 6, **dadurch gekennzeichnet, dass** die zweite Oberfläche (32) des Körpers (26) ein Winkelausmaß hat, das ausreicht, um die Pasta-Filata aufzunehmen, die durch die Extrusionsbohrungen (28) extrudiert wird, bis die Pasta-Filata im Wesentlichen aufgehört hat zu wachsen.

8. Die Maschine gemäß einem beliebigen der Ansprüche 1 bis 7, **dadurch gekennzeichnet, dass** die Umfangsnuten (38) am Körper (26) ein halbkreisförmiges Profil haben.

9. Die Maschine gemäß einem beliebigen der Ansprüche 1 bis 8, **dadurch gekennzeichnet, dass** sie Schneidmittel (46, 48) umfasst, ausgebildet, um die Pasta-Filata, die von der Trommel (34) geliefert wird, in Stäbchen mit vordefinierter Länge zu schneiden.

10. Die Maschine gemäß Anspruch 9, **dadurch gekennzeichnet, dass** die Schneidmittel eine Klinge (46) umfassen, die intermittierend von einem Antriebselement (48) angetrieben wird, gesteuert, um bei allen *n* Rotationsgraden der Trommel (34) einen Schnitt vorzunehmen, wobei *n* anhand der gewünschten Länge für die Stäbchen gewählt wird.

## Revendications

1. Machine de moulage de pâte filée, comprenant un conduit (14) prévu avec une sortie (22) ayant une tête de moulage (24) appliquée sur cette dernière, et des moyens de poussée (20a, 20b) pouvant fonctionner pour pousser une masse de pâte filée chargée dans le conduit (14) vers ladite sortie (22),
ladite tête de moulage (24) comprenant :
un tambour cylindrique (34) qui est supporté horizontalement en face de ladite sortie (22) et est entraîné pour tourner axialement grâce aux moyens d'entraînement (M), et
un corps (26) intercalé entre ladite sortie (22) et ledit tambour (34) et prévu avec une première surface (30) qui est agencée pour fermer ladite sortie (22), et avec une seconde surface (32) qui a un profil concave selon la forme d'un secteur de cylindre égal en diamètre audit tambour (34), est agencé de manière adjacente au tambour (34), **caractérisée en ce que** ladite seconde surface (32) a une série de rainures circonférentielles (38) communiquant avec ladite première surface (30) via au moins un canal (28),
moyennant quoi la pâte filée extrudée à travers ledit au moins un canal (28) est amenée dans lesdites rainures circonférentielles (38) et est transportée par le tambour (34) sur une partie de sa rotation, recevant ainsi une action de moulage déterminée par les profils opposés du corps (26) et du tambour (34).

2. Machine selon la revendication 1, **caractérisée en ce que** ledit au moins un canal s'étend obliquement à partir de ladite première surface (30) jusqu'à ladite seconde surface (32) dans une direction concordant avec la direction de rotation du tambour (34).

3. Machine selon la revendication 1 ou 2, **caractérisée en ce que** ledit au moins un canal se compose d'une fente horizontale (28) s'étendant entre ladite première surface (30) et ladite seconde surface (32).

4. Machine selon la revendication 3, **caractérisée en ce que** ladite fente horizontale (28) s'étend à partir du fond d'un canal horizontal ayant une section transversale en forme de V (30a) qui est formée sur la première surface (30) du corps (26).

5. Machine selon l'une quelconque des revendications 1 à 4, **caractérisée en ce que** ledit corps (26) est sollicité pour venir en butée contre le tambour (34) qui tourne en relation coulissante par rapport au corps, grâce à un mécanisme de blocage (50).

6. Machine selon la revendication 5, **caractérisée en ce que** ledit mécanisme de blocage (50) comprend un support (52) fixé sur le corps (26) et ayant un trou fileté (54) qui est mis en prise par une vis (56) venant en butée de manière frontale contre une butée (62) solidaire avec ledit conduit (14).

7. Machine selon l'une quelconque des revendications 1 à 6, **caractérisée en ce que** ladite seconde surface (32) du corps (26) a une étendue angulaire qui est suffisante pour contenir la pâte filée extrudée à travers lesdits trous d'extrusion (28) jusqu'à l'arrêt sensible de la croissance de la pâte filée.

8. Machine selon l'une quelconque des revendications 1 à 7, **caractérisée en ce que** lesdites rainures circonférentielles (38) sur le corps (26) ont un profil semi-circulaire.

9. Machine selon l'une quelconque des revendications 1 à 8, **caractérisée en ce qu'**elle comprend des moyens de tranchage (46, 48) adaptés pour trancher la pâte filée distribuée par le tambour (34) en bâtonnets ayant une longueur prédéterminée.

10. Machine selon la revendication 9, **caractérisée en ce que** lesdits moyens de tranchage comprennent une lame (46) qui est entraînée de manière intermittente par un actionneur (48) commandé pour réaliser une coupe tous les *n* degrés de rotation du tambour (34), où *n* est choisi en fonction de la longueur souhaitée pour les bâtonnets.
